# FASCICULE DE BREVET EUROPEEN

(11) **EP 0 674 841 B1**
(45) Date de publication et mention de la délivrance du brevet: **04.10.2000**
(21) Numéro de dépôt: 94104854.8
(22) Date de dépôt: 28.03.1994
(51) Int. Cl.: A23G 9/02

(54) **Confiserie congelée effervescente**
Brausendes Speiseeiskonfekt
Effervescent frozen confection

(43) Date de publication de la demande: 04.10.1995
(73) Titulaire: SOCIETE DES PRODUITS NESTLE S.A., 1800 Vevey (CH)
(72) Inventeur: Caron, Pierrette, F-60000 Beauvais (FR); Jousset, Sylvie, F-95150 Taverny (FR)
(74) Mandataire: Archambault, Jean

(56) Documents cités:
- EP-A- 0 437 927
- FR-A- 1 573 397
- FR-A- 2 320 772
- GB-A- 1 136 721

## Description

La présente invention concerne un article de confiserie glacée entrant en effervescence lors de sa consommation, ainsi qu'un procédé de fabrication d'un tel article.

La réalisation d'articles glacés entrant en effervescence au contact de l'eau dans la bouche lors de leur consommation et procurant donc une sensation de pétillance du même ordre que celle obtenue dans les boissons gazeuses pose un problème. Dans les boissons gazeuses, la sensation de pétillant provient du gaz carbonique sous pression. Dans une glace, ce gaz se solubilise et s'évapore sans provoquer la sensation recherchée.

Une solution au problème posé a été proposée, par exemple dans FR-A-1573397, par l'incorporation dans la glace de réactifs d'effervescence en poudre qui sont enrobés d'une substance imperméable à l'eau, une matière grasse, susceptible de se liquéfier dans la bouche et de libérer alors les réactifs qui, une fois mis en présence en solution dans l'eau, réagissent en dégageant du gaz carbonique. Les réactifs d'effervescence sont de préférence dispersés ensemble dans la matière grasse par l'entremise d'un agent dispersant, puis le mélange est mis sous forme de microbilles par pulvérisation dans l'azote liquide. Ce procédé est assez compliqué et la sensation d'effervescence obtenue en bouche est légère du fait de la nécessité d'utiliser pour l'enrobage une graisse à point de fusion relativement élevé qui ne peut libérer que lentement les réactifs d'effervescence puisqu'elle ne fond pas assez rapidement en bouche.

Le document FR-A-2320772 décrit des articles en forme constitués par une masse composite à l'état de gel ou de consistance cireuse renfermant deux ou plusieurs substances qui réagissent chimiquement l'une avec l'autre lors de leur mélange pour un effet désiré. Suivant une variante, ce document révèle des bonbons glacé contenant des systèmes effervescents.

L'invention concerne donc un article de confiserie glacée contenant des réactifs d'effervescence, susceptibles de procurer une sensation de pétillance en bouche par libération rapide de gaz carbonique, caractérisé par le fait que les réactifs d'effervescence sont séparés les uns des autres dans l'espace et placés directement dans des couches glacées juxtaposées de l'article sans l'intermédiaire d'agent imperméable à l'eau, que l'article se présente sous forme de sucettes glacées avec bâtonnet ou des petits cylindres à sucer ou à croquer contenus dans une gaine dont on les extrait progressivement par pression, de forme allongée, et que la configuration des couches de glace conduisant au résultat escompté est une disposition longitudinale juxtaposée, de part en part, par exemple en rayures ou en hélice ou à section en étoile ou en carré sensiblement inscrit dans un cercle ou un ovale.

Ce qui est nécessaire, c'est que les couches contenant les réactifs se mélangent en bouche et qu'ainsi les réactifs entrent en contact dès que l'on suce, croque ou consomme l'article au moyen d'une cuiller.

L'article peut avoir une apparence homogène avec des couches juxtaposées non différenciées visuellement ou être composé de couches juxtaposées contrastées à base de glaces de couleurs et de parfums différents. La composition de la glace peut être de préférence celle d'une glace à l'eau ou d'un sorbet, dans ce dernier cas plus ou moins foisonné.

L'invention concerne également un procédé de fabrication d'un article de confiserie glacée précédent, caractérisé par le fait que l'on congèle de manière successive dans des moules, une première composition glacée contenant un premier réactif d'effervescence, puis, lorsque la première couche est congelée, au moins une seconde composition glacée contenant un second réactif d'effervescence susceptible de réagir avec le premier en bouche et que les compositions glacées forment des couches juxtaposées longitudinalement de part en part de l'article.

Pour mettre en oeuvre le procédé, on peut utiliser l'une ou l'autre méthodes de congélation fractionnée connues, par exemple celle décrite dans la demande de brevet EP-A-506987.

On peut constituer les mélanges des compositions glacées en tenant compte de la nature des réactifs et des volumes respectifs des couches de glace dictés, le cas échéant par la forme de l'article dans des proportions permettant une réaction la plus totale possible. Ceci étant acquis, on peut régler le niveau de l'effervescence en fonction des concentrations des réactifs.

Comme réactifs d'effervescence, on peut utiliser tous composés comestibles susceptibles de réagir entre eux pour produire du gaz carbonique en solution aqueuse. On utilisera, de préférence d'une part un carbonate hydrosoluble approprié, par exemple le bicarbonate de sodium ou de potassium et d'autre part un acide, par exemple l'acide malique, tartrique, lactique ou de préférence citrique.

La fabrication des compositions a lieu de manière classique par mise en solution de l'agent d'effervescence dans la phase aqueuse, puis pasteurisation, foisonnage et congélation.

On peut, dans le cas où l'on désire fabriquer un produit à un seul parfum, réaliser la pasteurisation d'un seul mélange, que l'on peut ensuite séparer en plusieurs parts, par exemple deux, puis ajouter à chaque part le réactif d'effervescence approprié.

Selon une variante préférée de préparation des compositions, qui peut s'appliquer aussi bien aux produits mono- que multi-parfums, on peut ajouter le réactif d'effervescence d'abord à chacune des parts, puis la traiter séparément par pasteurisation, foisonnage et congélation.

Pour masquer les goûts étrangers, salé et respectivement acide apportés par les réactifs d'effervescence, on peut, de préférence, augmenter par exemple la matière sèche de la composition contenant l'acide, par exemple par addition d'hydrates de carbone sous forme de pulpe de fruits. Par ailleurs, on peut agir dans ce but sur les volumes respectifs des compositions, par exemple en plaçant la composition contenant le bicarbonate dans l'espace occupant le plus faible volume, par exemple les rayures d'un bâtonnet qui constituent sa périphérie. On peut également compenser les éventuelles notes salée et acide par l'aromatisation en fonction du goût désiré. Le cas échéant, on peut cumuler ces différentes mesures.

Les exemples ci-après illustrent l'invention. Dans ceux-ci, les parties et pourcentages sont pondéraux, sauf indication contraire.

### Exemple 1

Pour fabriquer un bâtonnet mono-parfum au cola, on prépare séparément une première et une deuxième composition à glacer comme suit:
1) On mélange à 60°C 29 parties de saccharose liquide et 49 parties d'eau. On y ajoute 0,2 partie de stabilisant constitué de carraghénanes et de gomme xanthane et 3,5 parties de sirop de glucose. On y ajoute alors 15,5 parties de purée de pommes, du colorant et enfin 2,1 parties d'acide citrique. Après pasteurisation du mélange à 86°C pendant 23 s., on refroidit la composition à 4°C et on la laisse au repos pendant 4 h à cette température. On complète à 100 parties par l'addition d'arôme de cola.
2) On prépare une deuxième composition à glacer comme en 1) ci-dessus, à cela près que l'on remplace l'acide citrique par du bicarbonate de sodium, à raison de 2,52 parties.

Pour fabriquer une sucette glacée à bâtonnet, on introduit la composition 1 ci-dessus dans un moule à section en forme d'étoile qui constituera le centre de l'article, on y place un bâtonnet, puis on congèle la composition, on réchauffe ensuite l'extérieur du moule et on démoule le centre. On introduit alors le centre dans un moule cylindrique exactement adapté au profil des branches de l'étoile et que l'on a préalablement rempli à environ moitié de la deuxième composition. Cette deuxième composition encore liquide remonte dans les rayures du bâtonnet étoilé et congèle à son contact. On démoule enfin le bâtonnet qui contient donc les deux compositions effervescentes séparées l'une de l'autre dans l'espace.

### Exemple 2

Pour fabriquer un bâtonnet bi-parfum du genre limonade au citron et à l'orange, on prépare séparément une première et une deuxième composition à glacer comme suit:
1) On mélange à 60°C 19,5 parties de saccharose liquide et 63 parties de limonade à l'orange. On y ajoute 0,2 partie de stabilisant constitué de carraghénanes et de gomme xanthane et 3,5 parties de sirop de glucose. On y ajoute alors 10 parties de purée de pommes, du colorant et enfin 2,1 parties d'acide citrique. Après pasteurisation du mélange à 86°C pendant 23 s., on refroidit la composition à 4°C et on la laisse au repos pendant 4 h à cette température. On complète à 100 parties par l'addition d'arôme d'orange.
2) On prépare une deuxième composition à glacer comme en 1) ci-dessus, à cela près que l'on remplace l'acide citrique par du bicarbonate de sodium, à raison de 2,52 parties, la limonade à l'orange par une limonade au citron et l'arôme d'orange par un arôme citron.

On fabrique une sucette glacée à bâtonnet comme indiqué à l'exemple 1.

### Exemple 3

On fabrique un article glacé contenu dans un petit cylindre en matière plastique muni d'un piston-poussoir à base de limonade au citron.

Pour ce faire, on prépare une composition en mélangeant à 60°C 18,5 parties de saccharose liquide et 68 parties d'eau. On y ajoute 0,2 partie de stabilisant constitué de carraghénanes et de gomme xanthane et 3,5 parties de sirop de glucose. On y ajoute alors 10 parties de purée de pommes, du colorant et on pasteurise le mélange à 86°C pendant 23 s., on refroidit la composition à 4°C et on la laisse au repos pendant 4 h à cette température. On complète à 100 parties par l'addition d'arôme citron.

On sépare ensuite la composition en deux parts égales, puis on ajoute dans la première part 2,1% d'acide citrique et dans la deuxième 2,52% de bicarbonate de sodium.

Pour fabriquer l'article, on introduit la première part ci-dessus dans un moule à section en forme d'étoile qui constituera le centre de l'article, puis on congèle la composition, on réchauffe ensuite l'extérieur du moule et on démoule le centre. On introduit alors le centre dans un petit cylindre en matière plastique, fermé à sa base par un poussoir en forme de piston, le cylindre étant exactement adapté au profil des branches de l'étoile, cylindre que l'on a préalablement rempli à environ moitié de la deuxième part. Cette deuxième part encore liquide remonte dans les rayures du centre étoilé et congèle à son contact.

## Revendications

1. Article de confiserie glacée contenant des réactifs d'effervescence, susceptibles de procurer une sensation de pétillance en bouche par libération rapide de gaz carbonique, caractérisé par le fait que les réactifs d'effervescence sont séparés les uns des autres dans l'espace et placés directement dans des couches glacées juxtaposées de l'article sans l'intermédiaire d'agent imperméable à l'eau, que l'article se présente, sous forme de sucette glacée avec bâtonnet ou de petit cylindre à sucer ou à croquer contenu dans une gaine dont on l'extrait progressivement par pression, de forme allongée, et que la configuration des couches de glace est une disposition longitudinale juxtaposée, de part en part, notamment en rayures ou en hélice ou à section en étoile ou en carré sensiblement inscrit dans un cercle ou un ovale.

2. Article selon la revendication 1, ayant une apparence homogène avec des couches juxtaposées non différenciées visuellement ou composé de couches juxtaposées contrastées à base de glaces à l'eau ou de sorbets de couleurs et de parfums différents.

3. Procédé de fabrication d'un article de confiserie glacée selon la revendication 1, caractérisé par le fait que l'on congèle de manière successive dans des moules, une première composition glacée contenant un premier réactif d'effervescence, puis, lorsque la première couche est congelée, au moins une seconde composition glacée contenant un second réactif d'effervescence susceptible de réagir avec le premier en bouche et que les compositions glacées forment des couches juxtaposées longitudinalement de part en part de l'article.

4. Procédé selon la revendication 3, caractérisé par le fait que l'on utilise comme réactifs d'effervescence, tous composés comestibles susceptibles de réagir entre eux pour produire du gaz carbonique en solution aqueuse.

5. Procédé selon la revendications 4, caractérisé par le fait que l'on utilise d'une part un carbonate hydrosoluble approprié, notamment le bicarbonate de sodium ou de potassium et d'autre part un acide, notamment l'acide citrique.

6. Procédé selon la revendication 3, dans lequel on fabrique un produit à un seul parfum par pasteurisation, foisonnage et congélation, caractérisé par le fait que l'on pasteurise un seul mélange, que l'on sépare ensuite en plusieurs parts, puis que l'on ajoute à chaque part le réactif d'effervescence approprié.

7. Procédé selon la revendication 3, s'appliquant aussi bien aux produits mono- que multi-parfums, caractérisé par le fait que l'on sépare la composition à glacer en plusieurs parts, que l'on ajoute le réactif d'effervescence d'abord à chacune des parts, puis qu'on les traite séparément par pasteurisation, foisonnage et congélation.

8. Procédé selon la revendication 3, caractérisé par le fait que, pour masquer les goûts étrangers, salé et respectivement acide apportés par les réactifs d'effervescence, on augmente la matière sèche de la composition contenant l'acide, par addition d'hydrates de carbone sous forme de pulpe de fruits, et/ou que l'on agit dans ce but sur les volumes respectifs des compositions, notamment en plaçant la composition contenant le bicarbonate dans l'espace occupant le plus faible volume et/ou que l'on compense les goûts salé et acide par l'aromatisation.

## Claims

1. Article of frozen confectionery containing effervescent reagents, capable of producing a fizzy sensation in the mouth by the rapid liberation of carbon dioxide, characterized in that the effervescent reagents are separated from each other in space and are placed directly in juxtaposed frozen layers of the article without the intervention of a water-impermeable agent, in that the article is in the form of an ice lolly with a stick or a small cylinder to suck or crunch contained in a sheath from which it is extracted progressively by pressure, having an elongated shape, and in that the configuration of the ice layers is a juxtaposed longitudinal arrangement, right through, in particular in stripes or in a helix or with a star-shaped or square section substantially inscribed in a circle or an oval.

2. Article according to claim 1, having a homogeneous appearance with visually undifferentiated juxtaposed layers or composed of contrasted juxtaposed layers based on water ices or sorbets with different colours or flavours.

3. Process for manufacturing an article of frozen confectionery according to claim 1, characterized in that there are frozen in a successive manner in moulds, a first frozen composition containing a first effervescent reagent and then, when the first layer is frozen, at least one second frozen composition containing a second effervescent reagent capable of reacting with the first in the mouth and in that the frozen compositions form longitudinally juxtaposed layers right through the article.

4. Process according to claim 3, characterized in that, as effervescent reagents, use is made of any edible compounds capable of reacting together to produce carbon dioxide in aqueous solution.

5. Process according to claim 4, characterized in that use is made on the one hand of a suitable water soluble water carbonate, in particular sodium or potassium bicarbonate and on the other hand an acid, in particular citric acid.

6. Process according to claim 3, wherein a product having a single flavour is manufactured by pasteurization, expansion and freezing, characterized in that a single mixture is pasteurized, and is then separated into several parts and the appropriate effervescent reagent is added to each part.

7. Process according to claim 3, which applies equally well to mono- as well as multi-flavoured products, characterized in that the composition to be frozen is separated into several parts, the effervescent reagent is first of all added to each of the parts, and these are treated separately by pasteurization, aeration and freezing.

8. Process according to claim 3, characterized in that in order to mask foreign, salty and acid tastes respectively contributed by the effervescent reagents, the dry matter content of the composition containing the acid is increased by adding carbohydrates in the form of fruit pulp, and/or in that the respective volumes of the compositions are adjusted for this purpose, in particular by placing the composition containing bicarbonate in the space occupying the smaller volume and/or in that the salty and acid tastes are compensated for by flavouring.

## Patentansprüche

1. Gefrorenes Süßwarenerzeugnis, das aufschäumende Reagenzien enthält, die dazu geeignet sind, ein sprudelndes Gefühl im Mund zu erzeugen, indem schnell Kohlensäure freigesetzt wird, dadurch gekennzeichnet, daß die aufschäumenden Reagenzien räumlich voneinander getrennt sind und direkt in gefrorenen, aneinander anliegenden Schichten des Erzeugnisses ohne ein dazwischen angeordnetes wasserundurchlässiges Mittel angeordnet sind, wobei das Erzeugnis in der Form eines Eislutschers mit Stiel vorliegt oder als kleiner Zylinder zum Lutschen oder zum Abbeißen, der in einer Hülle mit langgestreckter Form enthalten ist, aus der man ihn fortschreitend unter Druck herausbewegt, und wobei die Konfiguration der Eisschichten die einer durchgängigen aneinander anliegenden Anordnung in Längsrichtung ist, die insbesondere Streifen oder eine Helix oder einen sternförmigen oder viereckigen Querschnitt aufweist, der erkennbar von einem Kreis oder einem Oval umschrieben ist.

2. Erzeugnis nach Anspruch 1, das ein homogenes Erscheinungsbild mit aneinander anliegenden Schichten aufweist, die optisch nicht zu unterscheiden sind, oder das aus kontrastierenden, aneinander anliegenden Schichten auf der Basis von Wassereis oder von gefärbtem Sorbet und von verschiedenen Duftstoffen zusammengesetzt ist.

3. Verfahren zur Herstellung eines gefrorenen Süßwarenerzeugnisses nach Anspruch 1, dadurch gekennzeichnet, daß man nacheinander in Formen eine erste Eiszusammensetzung, die ein erstes aufschäumendes Reagens enthält, und nachdem die erste Schicht gefroren ist, wenigstens eine zweite Eiszusammensetzung, die ein zweites aufschäumendes Reagens enthält, das in der Lage ist, mit der ersten Zusammensetzung im Mund zu reagieren, gefriert, und die Eiszusammensetzungen langgestreckte, aneinander anliegende, durch das ganze Erzeugnis hindurchgehende Schichten bilden.

4. Verfahren nach Anspruch 3, dadurch gekennzeichnet, daß man als auf schäumende Reagenzien alle genießbaren Verbindungen verwendet, die geeignet sind, miteinander zu reagieren, um Kohlensäure in wäßriger Lösung zu entwickeln.

5. Verfahren nach Anspruch 4, dadurch gekennzeichnet, daß man einerseits ein geeignetes wasserlösliches Carbonat, insbesondere Natrium- oder Kaliumbicarbonat, und andererseits eine Säure, insbesondere Zitronensäure, verwendet.

6. Verfahren nach Anspruch 3, bei dem man ein Produkt mit einem einzigen Duftstoff durch Pasteurisieren, Aufschlagen und Kühlen herstellt, dadurch gekennzeichnet, daß man eine einzige Mischung pasteurisiert, die man dann in mehrere Teile auftrennt, und danach zu jedem Teil das geeignete aufschäumende Reagens hinzufügt.

7. Verfahren nach Anspruch 3, das man sowohl auf Produkte mit einem Duftstoff als auch auf Produkte mit mehreren Duftstoffen anwendet, dadurch gekennzeichnet, daß man die zu gefrierende Zusammensetzung in mehrere Teile auftrennt, zu jedem der Teile das aufschäumende Reagens hinzufügt, und danach die Teile getrennt voneinander durch Pasteurisieren, Aufschlagen und Gefrieren behandelt.

8. Verfahren nach Anspruch 3, dadurch gekennzeichnet, daß man, um einen Fremdgeschmack zu maskieren, der aufgrund der aufschäumenden Reagenzien salzig beziehungsweise sauer ist, den Trockenanteil der Zusammensetzung, die die Säure enthält, erhöht, indem man Kohlenhydrate in Form von Fruchtfleisch hinzufügt, und/oder indem man zu diesem Zweck auf die jeweiligen Volumina der Zusammensetzungen einwirkt, insbesondere indem man die Zusammensetzung, die das Bicarbonat enthält, in dem Raum anordnet, der das geringste Volumen einnimmt und/oder indem man den salzigen oder sauren Geschmack durch Aromatisieren kompensiert.
